# EUROPÄISCHE PATENTSCHRIFT

(11) **EP 1 701 055 B1**
(45) Veröffentlichungstag und Bekanntmachung des Hinweises auf die Patenterteilung: **02.09.2009**
(21) Anmeldenummer: 06100184.8
(22) Anmeldetag: 10.01.2006
(51) Int. Cl.: F16D 65/092, F16D 65/00

(54) **Reibbremsbelag für eine selbstverstärkende Scheibenbremse und selbstverstärkende Scheibenbremse**
Brake pad for a self-energising disc brake
Plaquette pour disque à auto-serrage

(30) Priorität: 10.03.2005 DE 102005011101
(43) Veröffentlichungstag der Anmeldung: 13.09.2006
(73) Patentinhaber: ROBERT BOSCH GMBH, 70442 Stuttgart (DE)
(72) Erfinder: Stolz, Ulrich, 70619, Stuttgart (DE); Foitzik, Bertram, 71636, Ludwigsburg (DE); Nielsen, Sven, 71729, Erdmannhausen (DE); Hach, Karl-Heinz, 71701, Schwieberdingen (DE)

(56) Entgegenhaltungen:
- EP-A- 0 691 485
- EP-A- 0 959 259
- EP-A- 1 074 756
- US-A- 5 842 546
- US-A- 5 868 233

## Beschreibung

### Stand der Technik

Die Erfindung betrifft einen Reibbremsbelag für eine selbstverstärkende Scheibenbremse mit den Merkmalen des Oberbegriffs des Anspruchs 1.

EP 069 14 85, als Stand der Technik angesehen, offenbart eine selbstverstärkende Scheibenbremse, die die Merkmale des Oberbegriffs des Anspruchs 1 aufweisst.

Selbstverstärkende Scheibenbremsen sind bekannt. In Ausführung als elektromechanische, d. h. eine elektromechanische Betätigungseinrichtung (auch Aktuator genannt) aufweisende Scheibenbremsen weisen sie einen Reibbremsbelag auf, der zur Bremsbetätigung mit der Betätigungseinrichtung gegen eine Bremsscheibe drückbar ist. Die Betätigungseinrichtung weist üblicherweise einen Elektromotor auf, der über ein Rotations-/Translations-Umsetzungsgetriebe den Reibbremsbelag gegen die Bremsscheibe drückt. Meist ist dem Rotations-/Translations-Getriebe und dem Elektromotor ein Untersetzungsgetriebe, beispielsweise ein Planetengetriebe, zwischengeschaltet. Das Rotations-/Translations-Umsetzungsgetriebe weist vielfach einen Gewindetrieb auf, es kann allerdings beispielsweise auch ein Nocken oder dgl. verwendet werden, der vom Elektromotor, vorzugsweise über ein Untersetzungsgetriebe, verschwenkbar ist und den Reibbremsbelag gegen die Bremsscheibe drückt. Die Betätigung ist beispielsweise auch mit einem Elektromagneten oder einem Piezoelement anstelle des Elektromotors und vorzugsweise ohne Getriebe möglich. Auch eine Druckmittelbetätigung, beispielsweise hydraulisch oder pneumatisch, ist nicht ausgeschlossen, auch wenn die Erfindung an sich für eine elektromechanische Betätigung insbesondere mit einem Elektromotor vorgesehen ist.

Zur Selbstverstärkung sind Selbstverstärkungseinrichtungen mit einem Keil- oder Rampenmechanismus bekannt. Die Selbstverstärkungseinrichtung weist eine Selbstverstärkungsplatte auf, die parallel zur Bremsscheibe angeordnet und in deren Umfangsrichtung verschieblich ist. Dabei soll unter in Umfangsrichtung auch eine Verschiebbarkeit in einer Tangenten- oder Sekantenrichtung der Bremsscheibe verstanden werden, also eine Verschieblichkeit mit einer Komponente in einer Umfangsrichtung der Bremsscheibe. Auf einer der Bremsscheibe zugewandten Vorderseite der Selbstverstärkungsplatte ist der Reibbremsbelag lösbar befestigt, auf einer der Bremsscheibe abgewandten Rückseite weist die Selbstverstärkungsplatte einen Keil auf, über den sie sich beispielsweise in einem Bremssattel abstützt. Wird der Reibbremsbelag bei einer Bremsbetätigung gegen die drehende Bremsscheibe gedrückt, übt die drehende Bremsscheibe eine Reibungskraft auf den Reibbremsbelag und über den Reibbremsbelag auf die Selbstverstärkungsplatte aus, die die Selbstverstärkungsplatte in Umfangsrichtung der Bremsscheibe beaufschlagt. Die Abstützung über den Keil bewirkt eine Kraft mit einer Komponente quer zur Bremsscheibe, die den Reibbremsbelag gegen die Bremsscheibe drückt. Diese Kraft wirkt als Andruckkraft zusätzlich zu einer von der Betätigungseinrichtung aufgebrachten Andruckkraft und erhöht die Andruck- und die Bremskraft der Scheibenbremse.

Dabei soll unter Keilmechanismus ein Keil mit über seine Länge konstantem Keilwinkel verstanden werden. Eine Rampe kann ihren Rampenwinkel über ihre Länge ändern, der Keil ist ein Grenzfall der Rampe. Durch die Änderung des Rampenwinkels wird eine Änderung der Selbstverstärkung mit der Verschiebung der Selbstverstärkungsplatte und dem Reibbremsbelag erzielt. Dadurch lässt sich insbesondere zu Beginn der Bremsbetätigung zur Überwindung eines Lüftspalts zwischen dem Reibbremsbelag und der Bremsscheibe eine hohe Zustellgeschwindigkeit und am Ende der Bremsbetätigung eine hohe Selbstverstärkung zur Erzielung einer großen Bremskraft erreichen.

Als weitere mechanische Selbstverstärkungsmechanismen sind beispielsweise Hebelmechanismen mit schräg zur Bremsscheibe stehenden Zug- oder Druckhebeln bekannt, die den Reibbremsbelag unter einem Stützwinkel schräg zur Bremsscheibe abstützen. Der Stützwinkel eines Hebelmechanismus entspricht dem Keilwinkel eines Keilmechanismus, es handelt sich um mechanische Äquivalente. Auch hydraulische Selbstverstärkungseinrichtungen mit einem Kolben, der von der Selbstverstärkungsplatte, die beim Bremsen von der drehenden Bremsscheibe in Umfangsrichtung verschoben wird, beaufschlagt wird, sind bekannt.

Den genannten Scheibenbremsen ist gemeinsam, dass die bei der Bremsbetätigung von der drehenden Bremsscheibe auf den gegen sie gedrückten Reibbremsbelag ausgeübte Reibungskraft vom Reibbremsbelag auf die Selbstverstärkungsplatte übertragen werden muss, um die Selbstverstärkungswirkung zu erzielen. Die Erfindung schlägt einen Reibbremsbelag für den erläuterten Verwendungszweck sowie eine selbstverstärkende Scheibenbremse mit einem solchen Reibbremsbelag vor.

### Erläuterung und Vorteile der Erfindung

Der erfindungsgemäße Reibbremsbelag mit den Merkmalen des Anspruchs 1 weist einen Rahmen mit einer Aussparung auf, in der der Reibbremsbelag einliegt. Der Rahmen übergreift den einliegenden Reibbremsbelag, so dass der Reibbremsbelag mit dem Rahmen lösbar an einer in Umfangsrichtung einer Bremsscheibe verschieblichen Selbstverstärkungsplatte einer selbstverstärkenden Scheibenbremse befestigbar ist. Die Erfindung ermöglicht eine einfache Befestigung des Reibbremsbelags an der Selbstverstärkungsplatte einer selbstverstärkenden Scheibenbremse. Der Reibbremsbelag ist mit geringem Aufwand wechselbar. Beim Lösen der Scheibenbremse, d. h. beim Abheben des Reibbremsbelags von der Bremsscheibe, hält der Rahmen den Reibbremsbelag an der Selbstverstärkungsplatte. Das ist bei selbstverstärkenden Scheibenbremsen, die die Selbstverstärkungsplatte beim Lösen der Scheibenbremse aktiv von der Bremsscheibe entfernen, wichtig. Der Reibbremsbelag kann mit einer dünnen Trägerplatte oder auch ohne Trägerplatte ausgebildet sein, da er nicht biegesteif sein muss, weil er von der Selbstverstärkungsplatte abgestützt wird. Dies ermöglicht einen leichten Reibbremsbelag. Die Trägerplatte kann, sofern vorhanden, größer als der Reibbremsbelag sein, d. h. seitlich überstehen, so dass der Rahmen den einliegenden Reibbremsbelag an der seitlich überstehenden Trägerplatte übergreift.

Die Unteransprüche haben vorteilhafte Ausgestaltungen und Weiterbildungen der im Anspruch 1 angegebenen Erfindung zum Gegenstand.

In bevorzugter Ausgestaltung der Erfindung weisen der Rahmen und/oder der einliegende Reibbremsbelag einen in Umfangsrichtung der Bremsscheibe wirksamen Formschluss mit der Selbstverstärkungsplatte der selbstverstärkenden Reibungsbremse auf, um die beim Bremsen von der drehenden Bremsscheibe auf den gegen sie gedrückten Reibbremsbelag ausgeübte Reibungskraft auf die Selbstverstärkungsplatte zu übertragen. Zu diesem Zweck sieht eine Ausgestaltung der Erfindung gemäß Anspruch 6 einen die Selbstverstärkungsplatte seitlich übergreifenden Rand und Anspruch 7 beispielsweise in Löcher der Selbstverstärkungsplatte nach Art von Passstiften eingreifende Stifte des Reibbremsbelags oder umgekehrt als Formschlusselemente zwischen Reibbremsbelag und Selbstverstärkungsplatte vor.

Die erfindungsgemäße Scheibenbremse mit den Merkmalen 8 weist einen Reibbremsbelag der vorstehend erläuterten Art auf, sie ist durch die vorstehenden Erläuterungen des Reibbremsbelags beschrieben worden.

### Zeichnung

Die Erfindung wird nachfolgend anhand eines in der Zeichnung dargestellten Ausführungsbeispiels näher erläutert. Es zeigen:
- Figur 1: eine Explosionsdarstellung eines erfindungsgemäßen Reibbremsbelags; und
- Figur 2: einen Schnitt einer erfindungsgemäßen Scheibenbremse gemäß Linie II-II in Figur 1.

### Beschreibung des Ausführungsbeispiels

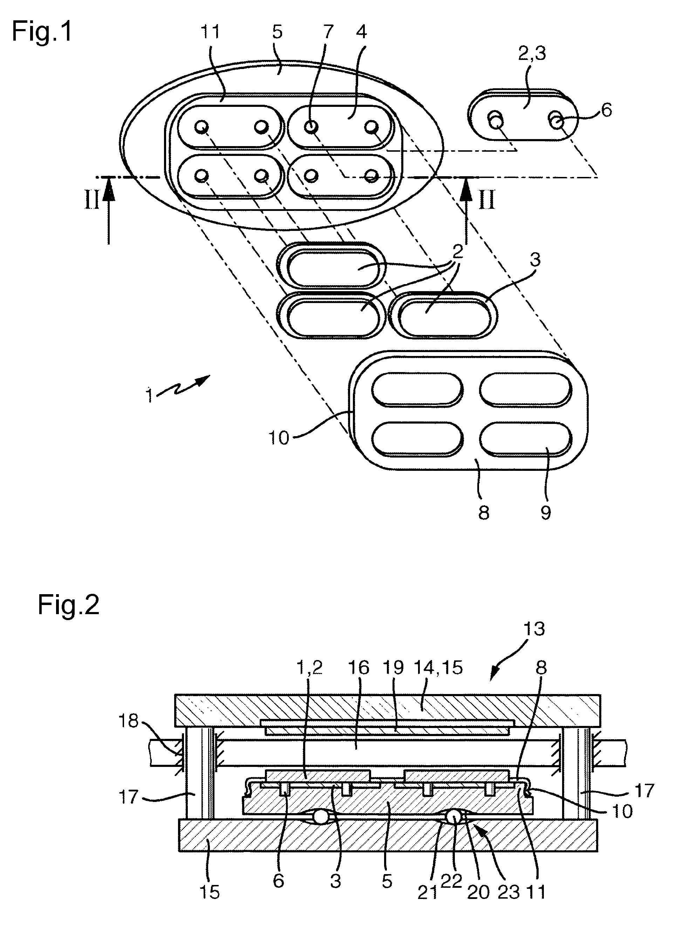

Der in Figur 1 dargestellte, erfindungsgemäße Reibbremsbelag 1 ist mehrteilig, er weist vier Belagsegmente 2 auf, von denen in Figur 1 drei in ihrer vorgesehenen Anordnung nebeneinander und das vierte Belagsegment 2 umgekehrt mit seiner Rückseite nach vorn dargestellt ist. Die Unterteilung des Reibbremsbelags 1 in mehrere, im Ausführungsbeispiel vier, Belagsegmente 2 hat den Vorteil einer verminderten Verzugs- und Rissbildungsgefahr durch thermische Spannungen, wenn der Reibbremsbelag 1 sich beim Bremsen erwärmt. Ein weiterer Vorteil der Aufteilung in vier Belagsegmente 2 ist eine Geräuschminderung.

Im dargestellten Ausführungsbeispiel weisen die vier Belagsegmente 2 des Reibbremsbelags 1 eine ovale Form auf und sind in einer 2 x 2 Matrix angeordnet. Beides ist allerdings nicht zwingend. Die Belagsegmente 2 sind wie herkömmliche Reibbremsbeläge aufgebaut, sie weisen außer dem eigentlichen Reibbremsbelag eine Trägerplatte 3 auf ihrer einer in Figur 1 nicht dargestellten Bremsscheibe abgewandten Rückseite auf. Die Trägerplatten 3 sind größer als die Reibbremsbeläge, sie stehen seitlich über.

Zur lösbaren Befestigung in einem Bremssattel 14 einer Scheibenbremse 13 (Figur 2) werden die Belagsegmente 2 des Reibbremsbelags 1 in Vertiefungen 4 einer Selbstverstärkungsplatte 5 eingesetzt. Die Vertiefungen 4 nehmen die Trägerplatten 3 passgenau auf, Form und Größe der Vertiefungen 4 stimmt mit Form und Größe der Trägerplatten 3 überein, eine Tiefe der Vertiefungen 4 entspricht einer Dicke der Trägerplatten 3. Die Vertiefungen 4 halten die Segmente 2 des Reibbremsbelags 1 in einer Ebene der Selbstverstärkungsplatte 5 und damit in einer zu der in Figur 2 dargestellten Bremsscheibe 16 parallelen Ebene durch Formschluss. Der Formschluss zwischen den Belagsegmenten 2 und der Selbstverstärkungsplatte 5 ist somit in einer Umfangsrichtung der Bremsscheibe 16 wirksam, in der die drehende Bremsscheibe 16 beim Bremsen eine Reibungskraft auf die Belagsegmente 2 ausübt. Die von der Bremsscheibe 16 auf die Reibbremsbeläge 2 ausgeübte Reibungskraft wird also durch den Formschluss zwischen den Belagsegmenten 2 und der Selbstverstärkungsplatte 5 von den Belagsegmenten 2 auf die Selbstverstärkungsplatte 5 übertragen.

Des Weiteren weisen die Belagsegmente 2 Stifte 6 auf, die in ihre Trägerplatten 3 eingesetzt sind. Die Stifte 6 greifen nach Art von Passstiften in Löcher 7 ein, die in den Vertiefungen 4 der Selbstverstärkungsplatte 5 angebracht sind. Auch dadurch ist ein Formschluss zwischen den Belagsegmenten 2 des Reibbremsbelags 1 und der Selbstverstärkungsplatte 5 bewirkt, der die beim Bremsen von der drehenden Bremsscheibe 16 auf die gegen sie gedrückten Belagsegmente 2 ausgeübte Reibungskraft auf die Selbstverstärkungsplatte 5 überträgt. Die Stifte 6 können auch in die Selbstverstärkungsplatte 5 eingesetzt sein und in Löcher in den Trägerplatten 3 der Belagsegmente 2 eingreifen oder die Stifte 6 können lose sein und sowohl in die Löcher 7 der Selbstverstärkungsplatte 5 als auch in Löcher in den Trägerplatten 3 der Belagsegmente 2 eingreifen (nicht dargestellt). Der Formschluss zwischen den Belagsegmenten 2 des Reibbremsbelags 1 und der Selbstverstärkungsplatte 5 ist auch in anderer Weise möglich.

Da die Selbstverstärkungsplatte 5 stabil und verwindungssteif ist, müssen die Belagsegmente 2 des Reibbremsbelags 1 nicht biege- und verwindungssteif sein, die Trägerplatten 3 können deswegen dünn sein, wodurch sich ihr Gewicht niedrig halten lässt. Denkbar ist auch, die Belagsegmente 2 des Reibbremsbelags 1 ohne Trägerplatten auszubilden und unmittelbar in die Vertiefungen 4 der Selbstverstärkungsplatte 5 einzusetzen.

Gehalten werden die Belagsegmente 2 des Reibbremsbelags 1 durch einen Rahmen 8. Der Rahmen 8 ist im dargestellten und beschriebenen Ausführungsbeispiel der Erfindung ein Blech-Tiefziehteil mit einer rechteckigen, viertelkreisförmig gerundete Ecken aufweisenden Form. Der Rahmen 8 weist vier gestanzte Aussparungen 9 auf, in denen die Belagsegmente 2 des Reibbremsbelags 1 passgenau einliegen. Der Rahmen 8 übergreift die seitlich überstehenden Trägerplatten 3 der Belagsegmente 2 und hält die Belagsegmente 2 dadurch an der Selbstverstärkungsplatte 5.

Ein Rand 10 des Rahmens 8 ist rechtwinklig in Richtung der Selbstverstärkungsplatte 5 abgewinkelt, er umgreift eine komplementäre Erhöhung 11 der Selbstverstärkungsplatte 5. Auch über den Rahmen 8 wird ein Formschluss zwischen den Belagsegmenten 2 des Reibbremsbelags 1 und der Selbstverstärkungsplatte 5 erzielt. Außerdem bildet der Rand 10 eine Versteifung des Rahmens 8.

Die in Figur 2 dargestellte erfindungsgemäße selbstverstärkende Scheibenbremse 13 weist einen Rahmensattel 14 als Bremssattel mit zwei zueinander parallelen Rahmenplatten 15 auf, zwischen denen die Bremsscheibe 16 angeordnet ist, zu der die Rahmenplatten 15 ebenfalls parallel sind. Die Rahmenplatten 15 sind durch zwei Zuganker 17 außerhalb eines Umfangs der Bremsscheibe 16 miteinander verbunden. Der Bremssattel 14 ist als Schwimmsattel ausgeführt, d. h. er ist quer zur Bremsscheibe 16 verschieblich. Zur verschieblichen Führung sind die Zuganker 17 in Hülsen 18 verschieblich gelagert, die in Figur 2 symbolisch dargestellt sind.

An der Bremsscheibe 16 zugewandten Innenseiten der Rahmenplatten 15 sind auf einer Seite der Bremsscheibe 16 der oben anhand Figur 1 erläuterte, an der Selbstverstärkungsplatte 5 befestigte Reibbremsbelag 1 mit seinen Belagsegmenten 2 und auf der anderen Seite der Bremsscheibe 16 ein feststehender Reibbremsbelag 19 angeordnet. Die Selbstverstärkungsplatte 5 weist auf ihrer der Bremsscheibe 16 abgewandten und der Rahmenplatte 15 zugewandten Rückseite rinnen- oder nutenförmige, nachfolgend als Rampen 20 bezeichnete Vertiefungen auf. Die Vertiefungen 20 verlaufen bogenförmig in einer Umfangsrichtung der Bremsscheibe 16, sie sind in ihrer Mitte am tiefsten und steigen in beiden Umfangsrichtungen an. Die Rahmenplatte 15 des Bremssattels 14 weist komplementäre Rampen 21 auf, die den Rampen 20 zugewandt und gegenüber liegend angeordnet sind. In den Rampen 20, 21 der Selbstverstärkungsplatte 5 und der Rahmenplatte 15 liegen Kugeln oder Rollen als Wälzkörper 22 ein, über die sich die Selbstverstärkungsplatte 5 an der Rahmenplatte 15 des Bremssattels 14 abstützt. Die in den Rampen 20, 21 einliegenden Wälzkörper 22 führen die Selbstverstärkungsplatte 5 auf einer in Umfangsrichtung der Bremsscheibe 16 verlaufenden Bahn. Genauer gesagt handelt es sich um eine schraubenlinienförmige Bahn mit Anstieg in Richtung der Bremsscheibe 16.

Zur Bremsbetätigung wird die Selbstverstärkungsplatte 5 von einer nicht dargestellten, elektromechanischen Betätigungseinrichtung in Umfangsrichtung der Bremsscheibe 16, und zwar immer in deren Drehrichtung, verschoben. Derartige Betätigungseinrichtungen weisen üblicherweise einen Elektromotor auf, der über ein Untersetzungsgetriebe und ein Rotations-/Translations-Umsetzungsgetriebe die Selbstverstärkungsplatte 5 verschiebt. Derartige Betätigungseinrichtungen sind bekannt und sollen, da sie nicht den eigentlichen Gegenstand der Erfindung bilden, an dieser Stelle nicht näher erläutert werden. Durch die Verschiebung bewegt sich die Selbstverstärkungsplatte 5 auf die Bremsscheibe 16 zu und drückt die Belagsegmente 2 des Reibbremsbelags 1 gegen die Bremsscheibe 16. Der Bremssattel 14 wird quer verschoben und drückt den feststehenden Reibbremsbelag 19 gegen die andere Seite der Bremsscheibe 16, die dadurch in an sich bekannter Weise gebremst wird.

Die drehende Bremsscheibe 16 übt eine Reibungskraft auf die gegen sie gedrückten Belagsegmente 2 des Reibbremsbelags 1 in ihrer Umfangs- und Drehrichtung aus, also in der Verschieberichtung der Selbstverstärkungsplatte 5. Die Reibungskraft wird von den Belagsegmenten 2 des Reibbremsbelags 1 auf die Selbstverstärkungsplatte 5 übertragen, die dadurch zusätzlich in ihrer Verschieberichtung beaufschlagt wird. Die Abstützung der Selbstverstärkungsplatte 5 über die Wälzkörper 22 an den Rampen 20, 21 bewirkt eine Abstützkraft senkrecht zu den Rampen 20, 21. Die Abstützkraft weist eine Kraftkomponente quer zur Bremsscheibe 16 auf, die eine Andruckkraft bildet, die die Belagsegmente 2 des Reibbremsbelags 1 zusätzlich zu einer von der elektromechanischen Betätigungseinrichtung aufgebrachten Andruckkraft gegen die Bremsscheibe 16 drückt. Die Bremskraft der Scheibenbremse 13 wird dadurch erhöht. Die Wälzkörper 22 und die Rampen 20, 21 bilden in beschriebener Weise eine mechanische Selbstverstärkungseinrichtung 23, die die Bremskraft der Scheibenbremse 13 erhöht.

## Patentansprüche

1. Selbstverstärkende Scheibenbremse, mit einem Reibbremsbelag (1), mit einer Betätigungseinrichtung, mit der der Reibbremsbelag (1) zum Bremsen gegen eine Bremsscheibe (16) drückbar ist und mit einer Selbstverstärkungseinrichtung (23), wobei die Selbstverstärkungseinrichtung (23) eine bei betätigter Scheibenbremse (13) von der drehenden Bremsscheibe (16) auf den gegen sie gedrückten Reibbremsbelag (1) ausgeübte Reibungskraft in eine Andruckkraft wandelt, die den Reibbremsbelag (1) zusätzlich zu einer Betätigungskraft gegen die Bremsscheibe (16) drückt, wobei der Reibbremsbelag (1) einen Rahmen (8) mit Aussparungen (9) aufweist, in denen Belagsegmente (2) einliegen, wobei die Belagsegmente (2) jeweils einen seitlich überstehenden Rand aufweisen, der vom Rahmen (8) übergriffen wird und wobei der Rahmen (8) mit den Belagsegmenten (2) an einer Selbstverstärkungsplatte (5) befestigt ist, **dadurch gekennzeichnet, dass** der Rahmen (8) an der Selbstverstärkungsplatte (5) lösbar befestigt ist, dass die Selbstverstärkungsplatte (5) in Umfangsrichtung einer Bremsscheibe (16) verschieblich in einem Bremssattel (14) aufgenommen ist und dass die Belagsegmente (2) jeweils einen in Umfangsrichtung wirksamen Formschluss (3,4; 6, 7) mit der Selbstverstärkungsplatte (5) aufweisen.

2. Selbstverstärkende Scheibenbremse nach Anspruch 1, **dadurch gekennzeichnet, dass** das Belagsegment (1) eine Trägerplatte (3) aufweist, die seitlich übersteht und vom Rahmen (8) übergriffen wird.

3. Selbstverstärkende Scheibenbremse nach Anspruch 1 oder 2, **dadurch gekennzeichnet, dass** der Reibbremsbelag (1) mehrteilig ist und mehrere Belagsegmente (2) aufweist, die in dem Rahmen (8) einliegen.

4. Selbstverstärkende Scheibenbremse einem der Ansprüche 1 bis 3, **dadurch gekennzeichnet, dass** der Rahmen (8) mindestens eine Versteifung (10) nach Art einer Versteifungsrippe aufweist.

5. Selbstverstärkende Scheibenbremse nach einem der Ansprüche 1 bis 4, **dadurch gekennzeichnet, dass** der Rahmen (8) einen in Umfangsrichtung der Bremsscheibe (16) wirksamen Formschluss mit der Selbstverstärkungsplatte (5) aufweist.

6. Selbstverstärkende Scheibenbremse nach einem der Ansprüche 1 bis 5, **dadurch gekennzeichnet, dass** der Rahmen (8) einen auf eine Seite von ihm abstehenden Rand (10) aufweist, der die Selbstverstärkungsptatte (5) seitlich übergreift.

## Claims

1. Self-energizing disc brake, having a friction brake lining (1), having an actuating device, by means of which the friction brake lining (1) can be pressed against a brake disc (16) for the purpose of braking, and having a self-energizing device (23), with the self-energizing device (23) converting a friction force, which is exerted by the rotating brake disc (16) on the friction brake lining (1) which is pressed against said brake disc (16) when the disc brake (13) is actuated, into a pressure force which presses the friction brake lining (1) against the brake disc (16) in addition to an actuating force, with the friction brake lining (1) having a frame (8) with cutouts (9) in which lining segments (2) lie, with the lining segments (2) having in each case one laterally protruding edge which is overlapped by the frame (8), and with the frame (8) together with the lining segments (2) being fastened to a self-energizing plate (5), **characterized in that** the frame (8) is releasably fastened to the self-energizing plate (5), **in that** the self-energizing plate (5) is held in a brake caliper (14) so as to be movable in the circumferential direction of a brake disc (16), and **in that** the lining segments (2) in each case have a positive fit (3, 4; 6, 7), which acts in the circumferential direction, with the self-energizing plate (5).

2. Self-energizing disc brake according to Claim 1, **characterized in that** the lining segment (1) has a support plate (3) which protrudes laterally and which is overlapped by the frame (8).

3. Self-energizing disc brake according to Claim 1 or 2, **characterized in that** the friction brake lining (1) is of multi-part design and has a plurality of lining segments (2) which lie in the frame (8).

4. Self-energizing disc brake according to one of Claims 1 to 3, **characterized in that** the frame (8) has at least one stiffening member (10) in the form of a stiffening rib.

5. Self-energizing disc brake according to one of Claims 1 to 4, **characterized in that** the frame (8) has a positive fit, which acts in the circumferential direction of the brake disc (16), with the self-energizing plate (5).

6. Self-energizing disc brake according to one of Claims 1 to 5, **characterized in that** the frame (8) has, projecting away from it on one side, an edge (10) which laterally overlaps the self-energizing plate (5).

## Revendications

1. Frein à disque à auto-amplification, avec une garniture de friction (1), avec un dispositif d'actionnement, avec lequel la garniture de friction (1) peut être pressée contre un disque de frein (16) pour effectuer le freinage, et avec un dispositif d'auto-amplification (23), le dispositif d'auto-amplification (23) convertissant une force de friction exercée par le disque de frein en rotation (16) sur la garniture de friction (1) pressée contre lui lorsque le frein à disque (13) est actionné, en une force de pression, qui presse la garniture de friction (1) en plus d'une force d'actionnement contre le disque de frein (16), la garniture de friction (1) présentant un cadre (8) avec des évidements (9), dans lesquels s'insèrent des segments de garniture (2), les segments de garniture (2) présentant à chaque fois un bord saillant latéralement, qui est saisi par le dessus par le cadre (8), le cadre (8) étant fixé avec les segments de garniture (2) à une plaque d'auto-amplification (5), **caractérisé en ce que** le cadre (8) est fixé à la plaque d'auto-amplification (5) de manière détachable, **en ce que** la plaque d'auto-amplification (5) est reçue dans un étrier de frein (14) de manière déplaçable dans la direction périphérique d'un disque de frein (16) et **en ce que** les segments de garniture (2) présentent à chaque fois un engagement par correspondance géométrique (3, 4 ; 6, 7) actif dans la direction périphérique, avec la plaque d'auto-amplification (5).

2. Frein à disque à auto-amplification selon la revendication 1, **caractérisé en ce que** le segment de garniture (1) présente une plaque de support (3) qui fait saillie latéralement et qui est saisie par le dessus par le cadre (8).

3. Frein à disque à auto-amplification selon la revendication 1 ou 2, **caractérisé en ce que** la garniture de friction (1) est en plusieurs parties et présente plusieurs segments de garniture (2) qui s'insèrent dans le cadre (8).

4. Frein à disque à auto-amplification selon l'une quelconque des revendications 1 à 3, **caractérisé en ce que** le cadre (8) présente au moins un renforcement (10) tel qu'une nervure de renforcement.

5. Frein à disque à auto-amplification selon l'une quelconque des revendications 1 à 4, **caractérisé en ce que** le cadre (8) présente un engagement par correspondance géométrique actif dans la direction périphérique du disque de frein (16), avec la plaque d'auto-amplification (5).

6. Frein à disque à auto-amplification selon l'une quelconque des revendications 1 à 5, **caractérisé en ce que** le cadre (8) présente un bord (10) saillant d'un côté depuis celui-ci, qui vient en prise par le dessus et latéralement avec la plaque d'auto-amplification (5).
